## Europäisches Patentamt
## European Patent Office
## Office européen des brevets

(11) Veröffentlichungsnummer: **0 128 135**
**B1**

(12) # EUROPÄISCHE PATENTSCHRIFT

(45) Veröffentlichungstag der Patentschrift:
**27.04.88**

(51) Int. Cl.⁴: **A 21 C 5/02,** G 01 F 11/02

(21) Anmeldenummer: **84890105.4**

(22) Anmeldetag: **01.06.84**

(54) Vorrichtung zum Portionieren von Teig.

(30) Priorität: **01.06.83 AT 2021/83**

(43) Veröffentlichungstag der Anmeldung:
**12.12.84 Patentblatt 84/50**

(45) Bekanntmachung des Hinweises auf die Patenterteilung:
**27.04.88 Patentblatt 88/17**

(84) Benannte Vertragsstaaten:
**DE GB NL SE**

(56) Entgegenhaltungen:
**AT-B-332 822**
**DE-A-2 650 290**
**DE-A-2 819 512**
**FR-A-2 306 432**

(73) Patentinhaber: **König, Helmut, Dipl.- Ing.,
Ursprungweg 70- 72, A-8045 Graz (AT)**

(72) Erfinder: **König, Helmut, Dipl.- Ing., Ursprungweg
70- 72, A-8045 Graz (AT)**

(74) Vertreter: **Boeckmann, Peter, Dipl.- Ing.,
Patentanwälte Dipl.- Ing. Peter Boeckmann,
Dipl.- Ing. Leo Brauneiss Strohgasse 10, A-1030
Wien (AT)**

EP 0 128 135 B1

LIBER, STOCKHOLM 1988

## Beschreibung

Die Erfindung bezieht sich auf eine Vorrichtung zum Portionieren von Teig, mit einem Einfüllschacht für den Teig, der in eine Kammer führt, aus welcher der Teig durch einen Schieber zumindest einer an der Kammer und sodann an einer Abstreifkante zur Portionierung vorbeibewegten, insbesondere an einer Portioniertrommel angeordneten, Aufnahmeöffnung zugeführt wird, wobei im Einfüllschacht nebeneinander zwei im Gegensinn um horizontale Achsen zur Drehung angetriebene Sternwalzen angeordnet sind, die bei ihrer Drehung eine Vorportionierung des Teiges mittels ihrer Sternarme durch Abschneiden des Teiges vornehmen, stillstehend jedoch mit aufeinander zugerichteten Sternarmen den Teigdurchgang durch den Einfüllschacht absperren, und wobei jede Sternwalze für sich stets in Förderrichtung dreht.

Eine Vorrichtung der eingangs geschilderten Art ist aus der AT-PS-332 822 bekannt. Mit einer solchen Vorrichtung kann aber nur ein bestimmtes Speichervolumen des Einfüllschachtes bzw. des darin angeschlossenen Fülltrichters bewältigt werden. Ein größeres Teigvolumen im Teigtrichter läßt sich durch Anordnung zusätzlicher Teigeinzugswalzen in diesem Trichter erfassen (AT-PS-352 652), was aber mit dem Nachteil eines zusätzlichen Aufwandes, auch im Hinblick auf Wartung und Reinigung, verbunden ist.

Die Erfindung setzt sich zur Aufgabe, eine Vorrichtung der eingangs geschilderten Art so zu verbessern, daß auf die Anordnung zusätzlicher Teigeinzugswalzen im Einfüllschacht bzw. im daran angeschlossenen Teigtrichter verzichtet werden kann, wobei dennoch der Einfüllschacht bzw. der Teigtrichter großräumig und somit mit einem großen Fassungsvolumen gebaut werden kann, ohne daß es zu Schwierigkeiten in der Teigförderung zur Kammer bzw. in der Vorportionierung des der Kammer zugeführten Teiges kommt. Die Erfindung löst diese Aufgabe dadurch, daß die beiden Sternwalzen eine unterschiedliche Anzahl von Sternarmen tragen und mit einer Drehzahl im reziproken Verhältnis ihrer Armanzahl angetrieben sind. Es werden also, wie bei der eingangs beschriebenen bekannten Konstruktion lediglich zwei Sternwalzen für den Teigeinzug benötigt, aber durch deren Formgebung erreicht, daß der Teigtrichter in seiner normal zur Achsrichtung der beiden Sternwalzen gemessenen Weite doppelt so groß gebaut werden kann wie bei der eingangs beschriebenen bekannten Konstruktion. Überraschenderweise fördern dennoch die beiden Sternwalzen bei der erfindungsgemäßen Konstruktion keine größeren Teigportionen in die Schiebekammer als bei der bekannten Konstruktion, so daß die Vorportionierung des Teiges wie bisher in der gewünschten Weise erfolgt. Es wird auch wie bisher gewährleistet, daß die einander zugewendeten Sternarme der beiden Sternwalzen die Vorportionierung des Teiges, insbesondere durch Abschneiden des Teigstranges, vornehmen, da die unterschiedliche Sternarmanzahl der beiden Sternwalzen durch die unterschiedliche Antriebsart der beiden Sternwalzen im Sinne der Erfindung kompensiert wird. Es trifft daher stets ein Arm der einen Sternwalze auf einen Arm der anderen Sternwalze, so daß auch der der eingangs beschriebenen bekannten Konstruktion eigene Vorteil gewahrt bleibt, daß bei Anhalten der Sternwalzen in einer Stellung, in welcher je einer ihrer Arme auf die jeweils andere Sternwalze zugerichtet ist, diese beiden Sternwalzenarme den Teigdurchgang durch den Einfüllschacht absperren.

Gemäß einer Weiterbildung der Erfindung sind die beiden Sternwalzen in an sich bekannter Weise nebeneinander mit ihren Achsen normal zur Bewegungsrichtung des Schiebers angeordnet und es ist die in Förderrichtung voranliegende Sternwalze jene mit geringerer Anzahl von Sternarmen. Es hat sich nämlich herausgestellt, daß diejenige Sternwalze, deren Anzahl von Sternarmen größer ist, vorwiegend zur Förderung des Teiges dient, wogegen die mit weniger Sternarmen vorgesehene Sternwalze vorwiegend eine Einzugsfunktion hat. Wenn nun die Maßnahme im erfindungsgemäßen Sinn getroffen wird, so wird der Teig vorwiegend an der Vorderwand des Einfüllschachtes, also an jener Stirnseite der Kammer, die den Aufnahmeöffnungen benachbart ist, herabgezogen, was für eine schonende Teigbehandlung von Vorteil ist.

Gemäß einer Weiterbildung der Erfindung ragt die Sternwalze mit geringerer Anzahl von Sternarmen mit ihren Armen durch eine Öffnung der Wand des Einfüllschachtes nach außen, wogegen die Sternwalze mit größerer Anzahl von Sternarmen mit ihren Armen weniger stark oder gar nicht über die ihr benachbarte Wand des Einfüllschachtes bzw. eine gedachte Verlängerung derselben nach außen ragt. Dadurch wird die Förderwirkung der mit mehr Sternarmen ausgebildeten Sternwalze noch intensiver. Zugleich wird verhindert, daß die mit weniger Sternarmen ausgebildete Sternwalze den Teig entgegen der Förderrichtung anhebt. Vorzugsweise ist die Anordnung erfindungsgemäß so getroffen, daß die der Sternwalze mit größerer Anzahl von Sternarmen benachbarte Wand des Einfüllschachtes tangential an dieser Sternwalze vorbeiläuft, wogegen eine gedachte Verlängerung der der anderen Sternwalze benachbarten Wand des Einfüllschachtes etwa mittig auf diese Sternwalze trifft. Dadurch ergeben sich erfahrungsgemäß besonders günstige Verhältnisse.

Weiters hat die Erfahrung gezeigt, daß sich erfindungsgemäß eine besonders günstige Konstruktion dann ergibt, wenn die eine Sternwalze sechs Sternarme und die andere Sternwalze vier Sternarme hat und diese beiden Sternwalzen mit Drehzahlen im Verhältnis 2 : 3 angetrieben sind.

Im Rahmen der Erfindung können die beiden Sternwalzen gleich groß sein. Es hat sich jedoch gezeigt, daß Vorteile hinsichtlich der Teigförderung und des Teigeinzuges bei schonender Teigbehandlung dann entstehen, wenn die Sternwalze mit weniger Sternarmen größer ist als die Sternwalze mit mehr Sternarmen. Das Größenverhältnis sollte jedoch nicht zu unterschiedlich sein.

Erfindungsgemäß sind beide Sternwalzen zwischen ihren Sternarmen mit konkaven Oberflächenpartien versehen. Dadurch wird eine unzulässige Pressung des Teiges während des Abschneidevorganges bei der Vorportionierung vermieden.

Gemäß einer Weiterbildung der Erfindung ist die Anordnung so getroffen, daß unter der Sternwalze mit größerer Anzahl von Sternarmen eine angetriebene Abstreifwelle angeordnet ist, deren Oberfläche die Bewegungsbahn der Sternarme dieser Sternwalze tangiert oder von ihr durch einen schmalen Spalt getrennt ist. Dadurch wird eine sichere Ablösung der vorportionierten Teigportionen von der mit mehr Sternarmen ausgebildeten Sternwalze erreicht. Der Antrieb dieser Abstreifwelle kann, z. B. durch eine Zahnradübersetzung, von einer der beiden Sternwalzen abgeleitet sein, so daß sich diese Abstreifwelle nur dann dreht, wenn sich auch die Sternwalzen drehen. Hiebei ist es zweckmäßig, wenn im Rahmen der Erfindung die Achse der Abstreifwelle auf einem Radius der Sternwalze mit größerer Anzahl von Sternarmen liegt, der gegenüber jenem Radius dieser Sternwalze, welcher durch die Achse der anderen Sternwalze verläuft, um den von zwei benachbarten Sternarmen der erstgenannten Sternwalze eingeschlossenen Winkel versetzt ist. In der Abschlußstellung der beiden Sternwalzen, in welchen sie mit aufeinander zugerichteten Sternarmen den Teigdurchgang abschließen, ist daher der diesem abschließenden Sternarm jeweils voranlaufende Sternarm der Sternwalze mit mehr Sternarmen auf die Abstreifwelle zu gerichtet. Die Umfangsgeschwindigkeit dieser Abstreifwelle ist vorzugsweise größer als die Umfangsgeschwindigkeit der mit ihr zusammenwirkenden Sternarme.

Es ist zweckmäßig, im Rahmen der Erfindung im oder am Einfüllschacht eine Klappe vorzusehen, die in niedergedrückter Stellung einen in den Anspeisungsstromkreis der Sternwalzen gelegten Sicherheitsschalter betätigt. Dadurch wird der Antrieb der Sternwalzen automatisch ausgeschaltet, sobald jemand von oben in den Einfüllschacht hineingreift und dadurch die Klappe niederdrückt.

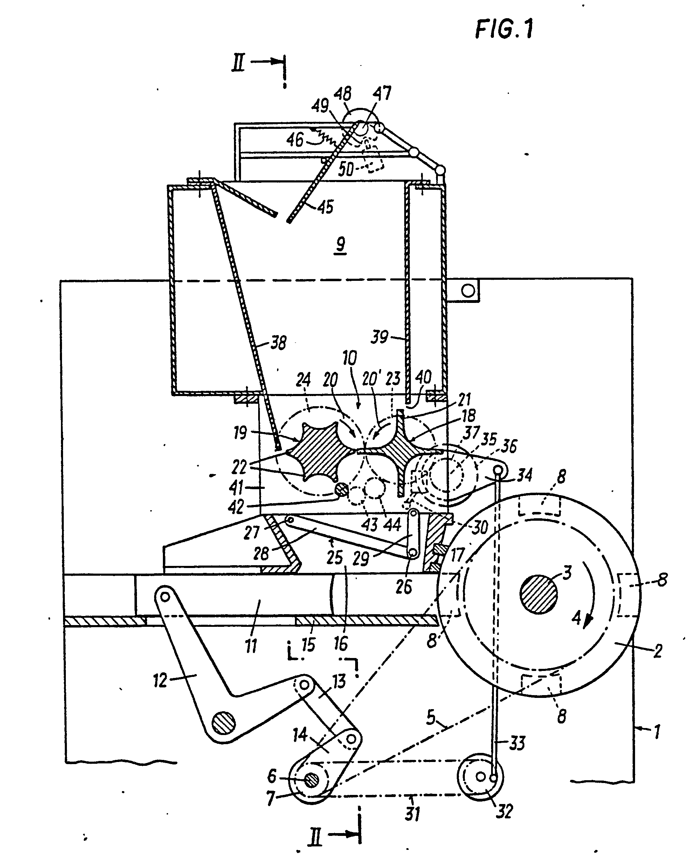

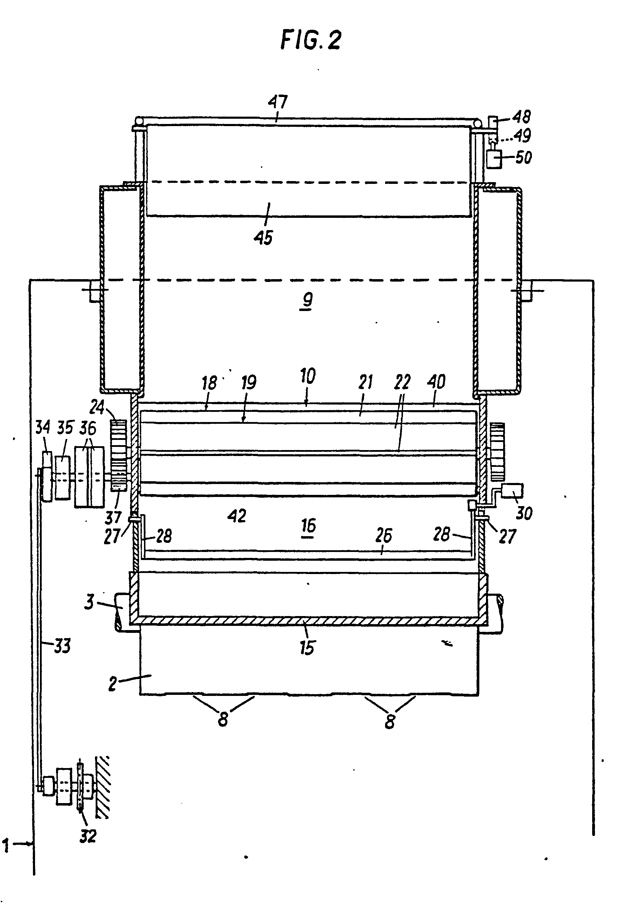

In der Zeichnung ist der Erfindungsgegenstand anhand eines Ausführungsbeispieles schematisch veranschaulicht. Fig.1 zeigt einen Vertikalschnitt durch die Vorrichtung normal zu den Achsen der beiden Sternwalzen. Fig. 2 ist ein Schnitt nach der Linie II - II der Fig. 1.

Die Vorrichtung hat ein Gestell 1, in welchem eine Trommel 2 um eine horizontale Achse 3 drehbar gelagert ist. Die Trommel 2 ist in Richtung des Pfeiles 4 mittels einer Kette 5 von einem auf eine Hauptantriebswelle 6 aufgekeilten Ritzel 7 schrittweise angetrieben, wobei die schrittweisen Vorschübe jeweils dem, in Umfangsrichtung gemessenen, Abstand zweier benachbarter Aufnahmeöffnungen 8 am Mantel der Trommel 2 entsprechen, von denen vier Reihen in gleichmäßigen Abständen gegeneinander versetzt an der Trommel 2 vorgesehen sind. In jede Reihe dieser Aufnahmeöffnungen 8 wird der durch einen Teigtrichter 9, der in einen Einfüllschacht 10 mündet, zugeführte Teig mittels eines Schiebers 11 eingedrückt, der von der Hauptantriebswelle 6 über einen Winkelhebel 12, eine Lasche 13 und eine Kurbel 14 angetrieben ist. Der Schieber 11 ist am Boden 15 einer Kammer 16 geführt. Der in die Aufnahmeöffnungen 8 während des Stillstandes der Trommel 2 eingedrückte Teig wird durch eine Abstreifkante 17 bei der Weiterdrehung der Trommel abgeschert, so daß sich in den Aufnahmeöffnungen 8 Teigstücke vorbestimmten Volumens befinden, die in an sich bekannter Weise in diesen Aufnahmeöffnungen 8 geschliffen (gewirkt) werden können, was durch ein nicht dargestelltes Schleifwerkzeug erfolgt, das vorzugsweise am oberen Scheitel der Trommel 2 angeordnet ist.

Ferner kann eine Vorrichtung zur Beölung der Teigstücke vorgesehen sein. Die Teigstücke werden zweckmäßig an der dem Schieber 11 gegenüberliegenden Seite der Trommel 2 auf ein nicht dargestelltes Förderband ausgeworfen, das die Teigstücke zur nächstfolgenden Behandlungsstation, z. B. zu einem Gärschrank oder einer Formstation, führt.

Im Einfüllschacht 10 ist eine Einrichtung zur Vorportionierung des der Kammer 16 zugeführten Teiges vorgesehen, welche Einrichtung aus zwei Sternwalzen 18, 19 besteht, die in Pfeilrichtung 20, 20' angetrieben sind, also gegensinnig, und bei dieser Bewegung den Teig vom Einfüllschacht 10 in die Kammer 16 fördern. Die Sternwalze 18 hat vier gegeneinander um 90° versetzte Sternarme 21, wogegen die Sternwalze 19 sechs gegeneinander um je 60° versetzte Sternarme 22 trägt. Die beiden Sternwalzen 18, 19 sind um horizontale, zueinander parallele Achsen, die auf gleicher Höhe liegen, im Einfüllschacht 10 gelagert und es ist jede dieser Sternwalzen für sich stets in der durch die Pfeile 20, 20' angedeuteten Förderrichtung angetrieben. Hiezu sind die beiden Sternwalzen 18, 19 außerhalb des Einfüllschachtes 10 durch Zahnräder 23, 24 miteinander gekoppelt, deren Übersetzungsverhältnis so gewählt ist, daß die beiden Sternwalzen 18, 19 mit Drehzahlen, die im reziproken ungekehrten Verhältnis der Armanzahl stehen, angetrieben sind. Für das dargestellte Ausführungsbeispiel lautet das Drehzahlverhältnis von Walze 18 zu Walze 19 somit 3 : 2. Damit wird erreicht, daß während der Drehung der beiden Sternwalzen 18, 19 im Sinne der Teigförderung jeweils zwei Sternarme 21, 22 der beiden Sternwalzen 18, 19 aufeinander treffen und eine Teigportion abschneiden, die sodann in die Kammer 16 fällt. Zweckmäßig ist diese intermittierende Drehung der Sternwalzen 18, 19 von einem auf die Teigfüllmenge in der Kammer 16 ansprechenden Fühler 25 gesteuert, der eine Stange 26 aufweist, die um eine horizontale Achse 27 schwenkbar in der Kammer 16 mittels zweier Laschen 28 zu beiden Seiten der Kammer 16 aufgehängt ist.

Die Stange 26 trägt einen Stössel 29, der einen in den Antriebskreis für die beiden Sternwalzen 18, 19 gelegten Schalter 30 ausschaltet, sobald die Teigmenge in der Kammer 16 einen vorbestimmten Wert überschritten hat, so daß bei der Vorwärtsbewegung des Schiebers 11 die Stange 26 ausreichend hoch angehoben wird. Umgekehrt schaltet der Fühler 25 den Schalter 30 wieder ein, sobald die Teigmenge in der Kammer 16 einen vorbestimmten Wert unterschreitet. Der auf diese Weise gesteuerte Antrieb der Sternwalzen 18, 19 erfolgt von der Hauptantriebswelle 6 aus über eine Kette 31, ein Ritzel 32, eine Schubstange 33, einen Hebel 34, einen Freilauf 35 und eine elektrisch betätigte Kupplung 36, welch letztere auf die beschriebene Weise, vom Fühler 25 gesteuert, ein- bzw. ausgeschaltet wird. Auf der Abtriebsseite der Kupplung 36 sitzt ein Ritzel 37, welches das auf die Welle der Sternwalze 18 aufgesetzte Zahnrad 23 antreibt.

Von den beiden Sternwalzen 18, 19 übt jene (19), welche mehr Sternarme hat, vorwiegend eine Förderwirkung auf den Teig aus, der an der Rückwand 38 des Einfüllschachtes 10 vorhanden ist, so daß dieser Teig zur Mitte des Einfüllschachtes 10, also in Richtung zur anderen Sternwalze 18 gefördert wird. Diese Sternwalze 18 hingegen hat vorwiegend eine Einzugsfunktion, d. h., der Teig, der an der Vorderwand 39 des Einfüllschachtes 10 bzw. des Teigtrichters 9 anliegt bzw. im Bereich dieser Wand liegt, wird von dieser Sternwalze 18 im Sinne der gewünschten Teigförderung in die Kammer 16 herabgezogen. Um dies zu begünstigen, sind die beiden Sternwalzen 18, 19 so in Bezug auf die Wände 38, 39 des Einfüllschachtes 10 angeordnet, daß die Rückwand 38 bzw. ihre gedachte Verlängerung annähernd tangential an der Bewegungsbahn des Umfanges der Sternwalze 19 vorbeiläuft, wogegen die gedachte Verlängerung der Vorderwand 39 etwa mittig auf die Sternwalze 18 trifft. Die Sternwalze 18 ragt dadurch mit ihren Sternarmen 21 durch eine Öffnung 40 der Vorderwand 39 des Einfüllschachtes 10 nach außen, wogegen dies für die Sternwalze 19 bzw. die ihr benachbarte Rückwand 38 nicht gilt. Dennoch ist auch die Sternwalze 19 von außen in ihrer Drehung durch eine Öffnung 41 der Rückwand 38 des Einfüllschachtes 10 sichtbar, so daß Funktionsstörungen der Walzen 18, 19 sofort feststellbar sind.

Zur Erreichung einer bestmöglichen Förderung durch die Sternwalze 19 bzw. einer bestmöglichen Teigeinziehung durch die Sternwalze 18 hat es sich als zweckmäßig erwiesen, wenn die radialen Abmessungen der mit weniger Sternarmen 21 versehenen Sternwalze 18 etwas größer sind als jene der anderen Sternwalze 19. Ferner ist es zur Erzielung einer einwandfreien Lösung der vorportionierten Teigmenge von der Sternwalze 19 zweckmäßig, unterhalb dieser, zweckmäßig etwas gegen die andere Sternwalze 18 zu versetzt, eine zur Drehbewegung angetriebene Abstreifwelle 42 im Teigeinfüllschacht 10 zu lagern, die über Zahnräder 43, 44 vom Zahnrad 23 angetrieben wird und daher in gleicher Drehrichtung umläuft wie die mit mehr Sternarmen 22 versehene Sternwalze 19. Die Übersetzungsverhältnisse sind hiebei so gewählt, daß die Umfangsgeschwindigkeit der Abstreiferwelle 42 etwas größer ist als die Umfangsgeschwindigkeit der Sternarme 22 der Sternwalze 19. Die beste Anordnung für die Abstreiferwelle 42 ist derart, daß ihre Achse auf einem Radius der Sternwalze 19 liegt, welcher gegenüber jenem Radius derselben Sternwalze 19, welcher durch die Achse der anderen Sternwalze 18 verläuft, um den von zwei benachbarten Sternarmen 22 der Sternwalze 19 eingeschlossenen Winkel versetzt ist. Dadurch wird erreicht, daß sich in der in Fig.1 dargestellten Abschlußstellung der beiden Sternwalzen 18, 19, in der diese den Teigdurchgang vom Einfüllschacht 10 in die Kammer 16 absperren, die Abstreiferwelle 42 stets in unmittelbarer Nähe des in Förderrichtung vorauseilenden Sternarmes 22 der Sternwalze 19 befindet, bzw. gegebenenfalls sogar in leichter Anlage daran.

Zweckmäßig ist am oberen Ende des Teigtrichters 9 eine Sicherheitsvorrichtung vorhanden, durch welche der Antrieb der beiden Sternwalzen 18, 19 ausgeschaltet wird, wenn in den Teigtrichter 9 hineingegriffen wird. Diese Vorrichtung hat eine Klappe 45, die von einer Feder 46 in der dargestellten Ruhelage gehalten wird. Die Klappe 45 ist mit einer Welle 47 im Gestell 1 schwenkbar gelagert, welche Welle 47 eine Nocke 48 trägt, die am Umfang mit einer Ausnehmung 49 versehen ist. In diese Ausnehmung 49 rastet ein Schalter 50 in der dargestellten Ruhelage der Klappe 45 ein, welcher im elektrischen Anspeisungsstromkreis des Antriebes für die beiden Sternwalzen 18, 19 liegt. Sobald die Klappe 45 aus ihrer Ruhelage verschwenkt wird, betätigt die Nocke 48 den Schalter 50 derart, daß dieser Anspeisungsstromkreis unterbrochen und dadurch eine Drehung der Sternwalzen 18, 19 unmöglich wird. Damit wird Verletzungen vorgebeugt.

Bei beiden Sternwalzen 18, 19 sind die Oberflächenpartien zwischen den Sternarmen 21 bzw. 22 konkav ausgerundet, um unzulässige Pressungen des Teiges während des Abschneidevorganges seiner Vorportionierung zu vermeiden.

**Patentansprüche**

1. Vorrichtung zum Portionieren von Teig, mit einem Einfüllschacht (10) für den Teig, der in eine Kammer (16) führt, aus welcher der Teig durch einen Schieber (11) zumindest einer an der Kammer und sodann an einer Abstreifkante (17) zur Portionierung vorbeibewegten, insbesondere an einer Portioniertrommel (2) angeordneten Aufnahmeöffnung (8) zugeführt wird, wobei im Einfüllschacht nebeneinander zwei im Gegensinn um horizontale Achsen zur Drehung angetriebene Sternwalzen (18, 19) angeordnet sind, die bei ihrer Drehung eine Vorportionierung des Teiges vornehmen, stillstehend jedoch mit aufeinander zu gerichteten Sternarmen (21, 22) den Teigdurchgang durch den Einfüllschacht absperren, und wobei jede Sternwalze für sich stets in Förderrichtung dreht, dadurch gekennzeichnet, daß die beiden Sternwalzen (18, 19) eine unterschiedliche Anzahl von Sternarmen (21, 22) tragen und mit einer Drehzahl im reziproken Verhältnis ihrer Armanzahl angetrieben sind.

2. Vorrichtung nach Anspruch 1, dadurch gekennzeichnet, daß die Sternwalze (18) mit geringerer Anzahl von Sternarmen (21) mit ihren Sternarmen durch eine Öffnung (40) der Wand (39) des Einfüllschachtes (10) nach außen ragt, wogegen die Sternwalze (19) mit größerer Anzahl von Sternarmen (22) mit diesen weniger stark oder gar nicht über die ihr benachbarte Wand (38) des Einfüllschachtes (10) bzw. eine gedachte Verlängerung derselben nach außen ragt.

3. Vorrichtung nach Anspruch 2, dadurch gekennzeichnet, daß die der Sternwalze (19) mit größerer Anzahl von Sternarmen (22) benachbarte Wand (38) des Einfüllschachtes (10) tangential an dieser Sternwalze (19) vorbeiläuft, wogegen eine gedachte Verlängerung der der anderen Sternwalze (18) benachbarten Wand (39) des Einfüllschachtes (10) etwa mittig auf diese Sternwalze (18) trifft.

4. Vorrichtung nach einem der Ansprüche 1 bis 3, dadurch gekennzeichnet, daß die eine Sternwalze (19) sechs Sternarme (22) und die andere Sternwalze (18) vier Sternarme (21) hat und diese beiden Sternwalzen (18, 19) mit Drehzahlen im Verhältnis 2 : 3 angetrieben sind.

5. Vorrichtung nach einem der Ansprüche 1 bis 4, dadurch gekennzeichnet, daß die Sternwalze (18) mit weniger Sternarmen (21) größer ist als die Sternwalze (19) mit mehr Sternarmen (22).

6. Vorrichtung nach einem der Ansprüche 1 bis 5, dadurch gekennzeichnet, daß beide Sternwalzen (18, 19) zwischen ihren Sternarmen (21, 22) konkave Oberflächenpartien haben.

7. Vorrichtung nach einem der Ansprüche 1 bis 6, dadurch gekennzeichnet, daß unter der Sternwalze (19) mit größerer Anzahl von Sternarmen (22) eine angetriebene Abstreifwelle (42) angeordnet ist, deren Oberfläche die Bewegungsbahn der Sternarme (22) dieser Sternwalze (19) tangiert oder von ihr durch einen schmalen Spalt getrennt ist.

8. Vorrichtung nach Anspruch 7, dadurch gekennzeichnet, daß die Achse der Abstreifwelle (42) auf einem Radius der Sternwalze (19) mit größerer Anzahl von Sternarmen (22) liegt, der gegenüber jenem Radius dieser Sternwalze (19), welcher durch die Achse der anderen Sternwalze (18) verläuft, um den von zwei benachbarten Sternarmen (22) der erstgenannten Sternwalze (19) eingeschlossenen Winkel versetzt ist.

9. Vorrichtung nach Anspruch 7 oder 8, dadurch gekennzeichnet, daß die Umfangsgeschwindigkeit der Abstreifwelle (42) größer ist als die Umfangsgeschwindigkeit der mit ihr zusammenwirkenden Sternarme (22).

10. Vorrichtung nach einem der Ansprüche 1 bis 9, dadurch gekennzeichnet, daß die beiden Sternwalzen (18, 19) nebeneinander mit ihren Achsen normal zur Bewegungsrichtung des Schiebers (11) angeordnet sind und daß die in Förderrichtung des Schiebers (11) voranliegende Sternwalze (18) jene mit geringerer Anzahl von Sternarmen (21) ist.

11. Vorrichtung nach einem der Ansprüche 1 bis 10, dadurch gekennzeichnet, daß im oder am Einfüllschacht (10) bzw. einem daran angeschlossenen Teigtrichter (9) eine Klappe (45) vorgesehen ist, die in niedergedrückter Stellung einen in den Anspeisungsstromkreis der Sternwalzen (18, 19) gelegten Sicherheitsschalter (50) betätigt.

12. Vorrichtung nach einem der Ansprüche 1 bis 11, dadurch gekennzeichnet, daß der Antrieb beider Sternwalzen (18, 19) von einem Fühler (25) in Abhängigkeit von der Teigfüllmenge in der Kammer (16) gesteuert ist.

**Claims**

1. Device for proportioning dough, having a filling shaft (10) for the dough, which leads into a chamber (16), from which the dough is fed by means of a pusher (11) to at least one receiving aperture (8) passing by the chamber and then a stripping edge (17) for proportioning, in particular arranged on a proportioning drum (2), with two adjacent star-shaped rollers (18, 19) arranged in the filling shaft and driven to rotate in opposite directions about horizontal axes, which carry out a preliminary proportioning of the dough as they rotate, but when stationary block the passage of the dough through the filling shaft with star arms (21, 22) directed towards each other, each star-shaped roller itself always rotating in the feed direction, characterised in that the two star-shaped rollers (18, 19) carry a different number of star arms (21, 22) and are driven at a speed in reciprocal relationship to the number of their arms.

2. Device according to claim 1, characterised in that the star-shaped roller (18) with the smaller number of star arms (21) projects outwardly through an aperture (40) in the wall (39) of the filling shaft (10) with these star arms, but the star-shaped roller (19) with the greater number of star arms (22) projects outwardly with these arms less, or not at all, over the adjacent wall (38) of the filling shaft (10) or an imaginary extension of it.

3. Device according to claim 2, characterised in that the wall (38) of the filling shaft (10) adjacent to the star-shaped roller (19) with the greater number of star arms (22) passes this star-shaped roller (19) tangentially, but an imaginary extension of the wall (39) of the filling shaft (10) adjacent to the other star-shaped roller (18) meets this star-shaped roller (18) approximately in the middle.

4. Device according to one of claims 1 to 3, characterised in that one star-shaped roller (19) has six star arms (22) and the other star-shaped roller (18) has four star arms (21), and these two star-shaped rollers (18, 19) are driven at speeds in the ratio 2 : 3.

5. Device according to one of claims 1 to 4, characterised in that the star-shaped roller (18) with fewer star arms (21) is bigger than the star-shaped roller (19) with more star arms (22).

6. Device according to one of claims 1 to 5, characterised in that both star-shaped rollers (18, 19) have concave surface parts between their star arms (21, 22).

7. Device according to one of claims 1 to 6, characterised in that below the star-shaped roller (19) with the greater number of star arms (22) there is arranged a driven stripping shaft (42) whose surface touches the path of movement of the star arms (22) of this star-shaped roller (19), or is separated from it by a narrow gap.

8. Device according to claim 7, characterised in that the axis of the stripping shaft (42) lies on a radius of the star-shaped roller (19) with the greater number of star arms (22) which is offset by the angle between two adjacent star arms (22) of the first mentioned star-shaped roller (19) from the radius of this starshaped roller (19) which extends through the axis of the other star-shaped roller (18).

9. Device according to claim 7 or 8, characterised in that the peripheral speed of the stripping shaft (42) is greater than the peripheral speed of the star arms (22) co-operating with it.

10. Device according to one of claims 1 to 9, characterised in that the two star-shaped rollers (18, 19) are arranged next to one another with their axes normal to the direction of movement of the pusher (11), and in that the star-shaped roller (18) located forwards in the feed direction of the pusher (11) is the one with the smaller number of star arms (21).

11. Device according to one of claims 1 to 10, characterised in that in or on the filling shaft (10) or a dough funnel (9) connected to it there is provided a flap (45) which in the pressed-down position actuates a safety switch (50) placed in the supply circuit of the star-shaped rollers (18, 19).

12. Device according to one of claims 1 to 11, characterised in that the drive of both star-shaped rollers (18, 19) is controlled by a sensor (25) dependent on the dough quantity in the chamber (16).

**Revendications**

1. Dispositif peur préparer des portions de pâte comprenant un puits de remplissage (10) pour la pâte qui conduit dans une chambre (16) à partir de laquelle la pâte est amenée par un tiroir (11) à au moins une ouverture réceptrice (8) ménagée sur la chambre, et, en particulier, dans un tambour à portions (2), et passe ensuite devant une arête de raclage (17) pour préparer les portions, deux cylindres en étoile (18, 19) étant montés l'un à côté de l'autre dans le puits de remplissage et entraînés en rotatien en sens opposés autour d'axes horizontaux, lesquels réalisent lors de leur rotation une préparation des portions de pâte, mais ferment cependant, lorsqu'ils sont au repos, le passage de la pâte à travers le puits de remplissage par leurs branches d'étoile (21, 22) qui doivent se diriger l'une vers l'autre, et chaque cylindre en étoile tournant toujours individuellement dans le sens du déplacement, caractérisé par le fait que les deux cylindres en étoile (18, 19) portent un nombre différent de branches (21, 22) et sont entraînés à une vitesse de rotation inversement proportionnelle à leur nombre de branches.

2. Dispositif selon la revendication 1, caractérisé par le fait que le cylindre en étoile (18) dont le nombre de branches (21) est le plus faible fait saillie vers l'extérieur par une ouverture (40) de la paroi (39) du puits de remplissage (10), alors que le cylindre en étoile (19) dont le nombre de branches (22) est le plus élevé fait saillie vers l'extérieur plus faiblement ou pas du tout par rapport à la paroi (38) voisine du puits de remplissage (10) ou à un prolongement de cette dernière.

3. Dispositif selon la revendication 2, caractérisé par le fait que la paroi (38) du puits de remplissage (10) qui est voisine du cylindre en étoile (19) dont le nombre de branches (22) est le plus élevé est tangente à ce cylindre en étoile (19), alors qu'un prolongement imaginaire de la paroi (39) du puits de remplissage (10) qui est voisine de l'autre cylindre en étoile (18) rencontre ce cylindre en étoile (18) sensiblement en son milieu.

4. Dispositif selon l'une des revendications 1 à 3, caractérisé par le fait que l'un des cylindres en étoile (19) comprend six branches (22) et l'autre cylindre en étoile (18) comprend quatre branches (21) et que ces deux cylindres en étoile (18, 19) sont entraînés avec des vitesses de rotation dans un rapport de 2 à 3.

5. Dispositif selon l'une des revendications 1 à 4, caractérisé par le fait que le cylindre en étoile (18) dont le nombre de branches (21) est le plus faible est plus grand que le cylindre (19) qui comporte plus de branches (22).

6. Dispositif selon l'une des revendications 1 à 5, caractérisé par le fait que les deux cylindres en étoile (18, 19) présentent des portions de surfaces concaves entre leurs branches (21, 22).

7. Dispositif selon l'une des revendications 1 à 6, caractérisé par le fait qu'un arbre mené de raclage (42) est monté au-dessous du cylindre en étoile (19) comportant le plus grand nombre de branches (22), sa surface étant tangente à la trajectoire des branches (22) de ce cylindre en étoile (19) ou séparée d'elle par une fente étroite.

8. Dispositif selon la revendication 7, caractérisé par le fait que l'axe de l'arbre de raclage (42) est situé sur un rayon du cylindre en étoile (19) comprenant le plus grand nombre de branches (22) qui, par rapport au rayon de ce cylindre en étoile (19) qui s'étend en passant par l'axe de l'autre cylindre en étoile (18), est décalé de l'angle compris entre deux branches (22) voisines sur le premier cylindre en étoile (19).

9. Dispositif selon la revendication 7 ou 8, caractérisé par le fait que la vitesse périphérique de l'arbre de raclage (42) est supérieure à la vitesse périphérique des branches (22) coopérant avec lui.

10. Dispositif selon l'une des revendications 1 à 9, caractérisé par le fait que les deux cylindres en étoile (18, 19) sont montés l'un à côté de l'autre, leurs axes étant perpendiculaires à la direction de déplacement du tiroir (11), et que le cylindre en étoile (18) disposé en avant dans le sens de déplacement du tiroir (11) est celui dont le nombre de branches est le plus faible.

11. Dispositif selon l'une des revendications 1 à 10, caractérisé par le fait qu'un volet (45) est prévu dans ou sur le puits de remplissage (10) ou un entonnoir à pâte (9) qui lui est rattaché, ce volet actionnant, dans sa position où il est poussé vers le bas, un interrupteur de sécurité (50) monté sur le circuit d'alimentation en courant des cylindres en étoile (18, 19).

12. Dispositif selon l'une des revendications 1 à 11, caractérisé par le fait que l'entraînement des deux cylindres en étoile (18, 19) est commandé par un capteur (25) en fonction de la quantité de pâte contenue dans la chambre (16).

FIG.1

# FIG.2